(19)

Europäisches Patentamt
European Patent Office
Office européen des brevets

(11) **EP 4 667 439 A1**

(12) **EUROPEAN PATENT APPLICATION**
published in accordance with Art. 153(4) EPC

(43) Date of publication:
**24.12.2025 Bulletin 2025/52**

(21) Application number: **24914762.0**

(22) Date of filing: **02.07.2024**

(51) International Patent Classification (IPC):
*C04B 35/532* (2006.01)    *A24F 40/70* (2020.01)
*A24F 40/46* (2020.01)    *A24F 40/20* (2020.01)
*H05B 3/14* (2006.01)    *H05B 3/02* (2006.01)
*C04B 35/622* (2006.01)

(86) International application number:
**PCT/CN2024/103120**

(87) International publication number:
**WO 2025/145540 (10.07.2025 Gazette 2025/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.01.2024   CN 202410022501**

(71) Applicants:
• **Sichuan Sanlian New Material Co., Ltd.**
  **Chengdu Sichuan 610199 (CN)**
• **China Tobacco Sichuan Industrial Co., Ltd.**
  **Chengdu Sichuan 610101 (CN)**

(72) Inventors:
• **HAN, Donglin**
  **Chengdu, Sichuan 610199 (CN)**
• **LIANG, Kun**
  **Chengdu, Sichuan 610199 (CN)**
• **ZENG, Xianqing**
  **Chengdu, Sichuan 610199 (CN)**

• **LIU, Kai**
  **Chengdu, Sichuan 610199 (CN)**
• **DENG, Yong**
  **Chengdu, Sichuan 610199 (CN)**
• **TANG, Lei**
  **Chengdu, Sichuan 610199 (CN)**
• **XIE, Li**
  **Chengdu, Sichuan 610199 (CN)**
• **ZHOU, Yunhong**
  **Chengdu, Sichuan 610199 (CN)**
• **XU, Mingmei**
  **Chengdu, Sichuan 610199 (CN)**
• **CHEN, Guimin**
  **Chengdu, Sichuan 610199 (CN)**
• **ZHENG, Wen**
  **Chengdu, Sichuan 610199 (CN)**
• **ZHOU, Zhigang**
  **Chengdu, Sichuan 610199 (CN)**

(74) Representative: **V.O.**
  **P.O. Box 87930**
  **2508 DH Den Haag (NL)**

(54) **METHOD FOR PREPARING BODY HEATING GRAPHITE, PRODUCT, AND USE THEREOF IN HEATING APPLIANCE**

(57)    Disclosed in the present invention are a method for preparing a bulk-heating graphite, a product, and an application thereof in a heating device. The method includes: weighing a powder material and a binder, wherein the powder material is pitch coke, and the binder is modified pitch; preheating the pitch coke; heating the modified pitch to a molten state; pouring the modified pitch into the preheated pitch coke and kneading to obtain a paste; subjecting the paste to hot rolling, cooling, crushing, and sieving to obtain a mixed powder; isostatically pressing molding the mixed powder to form a green body sample; and subjecting the molded green body sample to two calcining treatments to obtain a bulk-heating graphite sample. The method for preparing the bulk-heating graphite, the product, and the application thereof in the heating device provided in the present invention enable a honeycomb graphite as a whole to possess a heatable resistance, generating heat uniformly upon electrification, so as to produce sufficiently heated air with uniform temperature distribution and improved heating effects, thereby meeting the requirement of baking the tobacco rod for smoking, and resulting in excellent baking effects of the tobacco rod and consistent smoke flavor for every puff. There is no need to combine a porous honeycomb diffuser with other heating elements, making assembly more convenient.

weighing a powder material and a binder, wherein the powder material is pitch coke, and the binder is modified pitch — S1

preheating the weighed pitch coke — S2

heating the modified pitch to a molten state — S3

pouring the modified pitch in the molten state into the preheated pitch coke, and kneading to obtain a paste — S4

taking out the paste and subjecting the paste to hot rolling, cooling, crushing, and sieving to obtain a mixed powder — S5

isostatically pressing molding the mixed powder to form a green body sample — S6

subjecting the molded green body sample to two calcining treatments to obtain a bulk-heating graphite sample — S7

FIG. 4

**Description**

TECHNICAL FIELD

The present invention relates to the technical field of heat-not-burn heating devices, in particular to a method for preparing a bulk-heating graphite, a product, and an application thereof in a heating device.

BACKGROUND

Current heat-not-burn heating devices adopt airflow heating. The airflow heating (e.g., bottom air heating) technology generally adopts a heating wire or a heating needle, which is self-heated first and then heats a thermally conductive component connected thereto to raise the temperature of the thermally conductive component rapidly. The heat is diffused around, heating the air passing therethrough. The heated air then enters a tobacco rod, baking the tobacco rod to produce smoke. In this heating method, the closer to the heating source (such as heating wire, heating rod, etc.), the higher the temperature; and the farther away from the heat source, the lower the temperature. As a result, the air that is used to bake the tobacco rod has significant temperature differences, leading to unsatisfactory heating effects.

Therefore, there is a need to provide a method for preparing a bulk-heating graphite, a product, and an application thereof in a heating device.

SUMMARY

An objective of the present invention is to provide a method for preparing a bulk-heating graphite, a product, and an application thereof in a heating device, so as to solve the above problems in the prior art. The graphite as a whole possesses a heatable resistance, generating heat uniformly upon electrification, so as to produce sufficiently heated air with uniform temperature distribution and improved heating effects.

The present invention provides a method for preparing bulk-heating graphite, including the following steps:

weighing a powder material and a binder, wherein the powder material is pitch coke, and the binder is modified pitch;
preheating the weighed pitch coke;
heating the modified pitch to a molten state;
pouring the modified pitch in the molten state into the preheated pitch coke, and kneading to obtain a paste;
taking out the paste and subjecting the paste to hot rolling, cooling, crushing, and sieving to obtain a mixed powder;
isostatically pressing molding the mixed powder to form a green body sample; and
subjecting the molded green body sample to two calcining treatments to obtain a bulk-heating graphite sample.

In the method for preparing the bulk-heating graphite as described above, preferably, the step of weighing the powder material and the binder specifically includes:

weighing the modified pitch, wherein a proportion of the modified pitch in a mixture of the pitch coke and the modified pitch is in a range from 23% to 28%; and
weighing the pitch coke, wherein the pitch coke is sieved powder with a particle size in a range from 200 mesh to 325 mesh.

In the method for preparing the bulk-heating graphite as described above, preferably, the step of preheating the weighed pitch coke specifically includes:

pouring the weighed pitch coke into a kneading pot for preheating, wherein a preheating temperature is in a range from 150°C to 180°C, and a preheating time is in a range from 50 minutes to 70 minutes; and
the step of heating the modified pitch to the molten state specifically includes:
heating the modified pitch to a temperature equal to or greater than 200°C to transform the modified pitch from a solid state to the molten state.

In the method for preparing the bulk-heating graphite as described above, preferably, the step of pouring the modified pitch in the molten state into the preheated pitch coke and kneading specifically includes:
pouring the modified pitch in the molten state into the kneading pot, and kneading the modified pitch with the preheated pitch coke, wherein a kneading time is in a range from 40 minutes to 50 minutes, and a kneading temperature is in a range from 170°C to 190°C.

In the method for preparing the bulk-heating graphite as described above, preferably, the step of taking out the paste and subjecting the paste to hot rolling, cooling, crushing, and sieving to obtain the mixed powder specifically includes:

taking out the paste from the kneading pot after kneading, and feeding the paste into a rolling machine to hot-roll the paste twice at a temperature in a range from 160°C to 190°C;
naturally cooling the paste;
crushing the paste after the paste is naturally cooled; and
sieving the crushed paste to a particle size below 100 mesh to obtain the mixed powder.

In the method for preparing the bulk-heating graphite as described above, preferably, the step of isostatically pressing molding the mixed powder to form the green body sample specifically includes:

loading the mixed powder into a steel mold, and pre-molding the mixed powder on a hydraulic four-column press, wherein a pre-molding pressure is in a range from 18 MPa to 22 MPa, and a bulk density of the pre-molded body is in a range from $1.17/cm^3$ to $1.21/cm^3$; and
demolding the pre-molded body from the hydraulic four-column press, placing the pre-molded body into a rubber bag, and then isostatically pressing the pre-molded body under a pressure in a range from 110 MPa to 130 MPa.

In the method for preparing the bulk-heating graphite as described above, preferably, the step of subjecting the molded green body sample to two calcining treatments to obtain the bulk-heating graphite sample specifically includes:

subjecting the molded green body sample to a first calcining treatment to obtain a primary calcined sample;
subjecting the primary calcined sample to an impregnation treatment; and
subjecting the impregnated primary calcined sample to a second calcining treatment to obtain the bulk-heating graphite sample.

In the method for preparing the bulk-heating graphite as described above, preferably, the step of subjecting the molded green body sample to the first calcining treatment specifically includes:

subjecting the molded green body sample to the first calcining treatment in a box-type resistance furnace at a first calcining temperature in a range from 880°C to 920°C, holding the temperature for 50 minutes to 70 minutes, naturally cooling to room temperature to obtain the primary calcined sample,
the step of subjecting the primary calcined sample to the impregnation treatment specifically includes:

taking out the primary calcined sample from the box-type resistance furnace;
heating and melting an electrically conductive binder; and
immersing the primary calcined sample in the melted electrically conductive binder for impregnation treatment,
and
the step of subjecting the impregnated primary calcined sample to the second calcining treatment to obtain the bulk-heating graphite sample specifically includes:
subjecting the impregnated primary calcined sample to the second calcining treatment in a box-type resistance furnace at a temperature in a range from 1800°C to 2000°C, holding the temperature for 50 minutes to 70 minutes, and naturally cooling to room temperature to obtain the bulk-heating graphite sample.

The present invention further provides a bulk-heating graphite prepared by the above preparation method.
The present invention further provides an application of the bulk-heating graphite in a heating device. The application method includes: sleeving copper rings on an upper end and a lower end of the bulk-heating graphite respectively, and electrically energizing the copper rings thereby generating heat.
As compared with the diffuser indirect heating method, the method for preparing the bulk-heating graphite, the product, and the application thereof in the heating device provided in the present invention enable a honeycomb graphite as a whole to possess a heatable resistance, generating heat uniformly upon electrification, so as to produce sufficiently heated air with uniform temperature distribution and improved heating effects. The resistivity of the bulk-heating graphite can reach 50 $\mu\Omega\cdot$m or above, and the resistance value of the bulk-heating graphite can reach 0.5 $\Omega$ or above, realizing bulk-heating, where electrification at both ends allows the entire body to generate heat, thereby meeting the requirement of baking the tobacco rod for smoking. The air flowing through the bulk-heating graphite can be fully heated, and the temperature of the air is uniform, resulting in excellent baking effects of the tobacco rod and consistent smoke flavor for every puff. Unlike conventional methods, there is no need to combine a porous honeycomb diffuser with other heating elements, making assembly more convenient.

BRIEF DESCRIPTION OF THE DRAWINGS

In order to make the objectives, technical solutions and advantages of the present invention clearer, the present invention will be further described with reference to the accompanying drawings.

FIG. 1 is a longitudinal sectional view showing a honeycomb diffuser heated by graphite as a resistive heating element.
FIG. 2 is an XRD pattern of a C-phase graphite.
FIG. 3 is a schematic diagram illustrating a relationship between the resistivity and graphitization degree of a graphitized article.
FIG. 4 is a flowchart of a method for preparing bulk-heating graphite according to an embodiment provided by the present invention.
FIG. 5 is a longitudinal sectional view of a bulk-heating graphite.

DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noted that: relative arrangement of components and steps, material composition, numerical expressions, and numerical values set forth in these embodiments, unless specifically stated otherwise, should be construed as merely illustrative, and not as a limitation.

The use of the terms "first", "second" and similar words in the present disclosure do not denote any order, quantity or importance, but are merely used to distinguish between different parts. A word such as "comprise", "include" or variants thereof means that the element before the word covers the element(s) listed after the word without excluding the possibility of also covering other elements. The terms "up", "down", or the like are used only to represent a relative positional relationship, and the relative positional relationship may be changed correspondingly if the absolute position of the described object changes.

In the present disclosure, when it is described that a particular component is located between the first component and the second component, there may be an intermediate component between the particular component and the first component or the second component, and alternatively, there may be no intermediate component. When it is described that a particular component is connected to other components, the particular component may be directly connected to said other components without an intermediate component, and alternatively, may not be directly connected to said other components but with an intermediate component.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

The current airflow heating (e.g., bottom air heating) technology heats air through a porous honeycomb diffuser, and then bakes a tobacco rod with the heated air. In this method, the closer to the heating source (such as heating wire, heating rod, etc.), the higher the temperature; and the farther away from the heat source in the heat diffuser, the lower the temperature. To address this issue, materials with high thermal conductivity shall be used to reduce the temperature difference as much as possible, ensuring uniform air temperature for baking the tobacco rod.

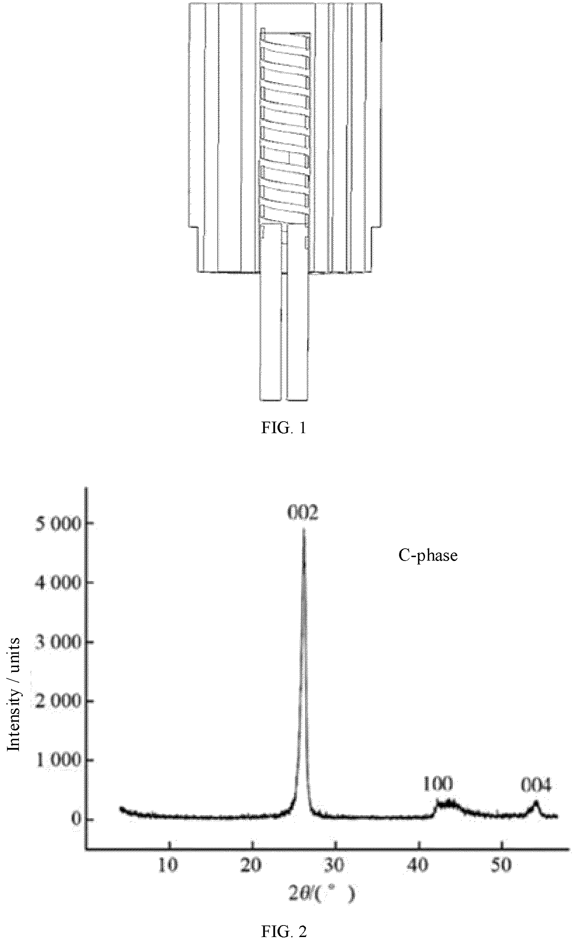

The currently used graphite for airflow heating, as a porous honeycomb heat diffuser, is shown in FIG. 1, which requires high thermal conductivity and small thermal capacity. Graphite is indeed a thermally conductive material with excellent performance. However, the resistivity of the currently used porous honeycomb graphite is very low, and the resistance value thereof is less than 0.1 Q, which means it is difficult to achieve bulk-heating.

In the present invention, the formula of the graphite used as a heat diffuser is adjusted to make the resistance value of the graphite reach 0.5 $\Omega$ or above, so that the graphite itself has a certain resistance value. For example, the graphite as a whole can have a resistance value ranging from 0.5 $\Omega$ to 3 Q, allowing bulk-heating, where electrification at both ends enables the entire graphite body to generate heat, meeting the requirement of baking the tobacco rod for smoking. The resistivity of conventional graphite is about 10 $\mu\Omega \cdot$m, while the resistivity of the heating graphite prepared by the method of the present invention is in a range from 50 $\mu\Omega\cdot m$ to 500 $\mu\Omega\cdot m$.

The microstructure analysis and physicochemical characterization of graphite products during the graphitization heat treatment process are evaluated by measuring the *g* parameter to approximately estimate the graphitization degree of the graphite products. The graphitization degree refers to the degree to which carbon atoms form a close-packed hexagonal graphite crystal structure. The closer the lattice size is to the lattice constant of ideal graphite, the higher the graphitization degree is. The graphitization process of amorphous carbon transforming into graphite is a transition process from amorphous to crystalline, and the crystallinity is denoted by the graphitization degree (i.e., the *g* parameter).

FIG. 2 shows an XRD pattern of a C-phase graphite, wherein $CuK_\alpha$ is used as an X-ray source, and the wavelength $\lambda$ of the X-ray is 0.154 nm. Based on the $2\theta$ angle corresponding to the (002) crystal plane characteristic peak in the XRD pattern in FIG. 2, an interlayer spacing $d_{002}$ is calculated using the full width at half maximum method according to the Bragg's Law ($2d_{002}\sin\theta=2\lambda$). Then the result is substituted into the Merring-Maire formula:

$$g = \frac{0.3440 - d_{002}}{0.3440 - 0.3354}$$ , to approximately calculate the graphitization degree of a graphite product.

For example, a specific calculation process and results are as follows:

$$d_{002} = \frac{\lambda}{2\sin\theta} = \frac{0.154}{2\times\sin 13.11^o} = 0.3386nm$$

$$g = \frac{0.3440 - d_{002}}{0.3440 - 0.3354} = \frac{0.3440 - 0.3386}{0.3440 - 0.3354} \times 100\% = 62.79\%$$ .

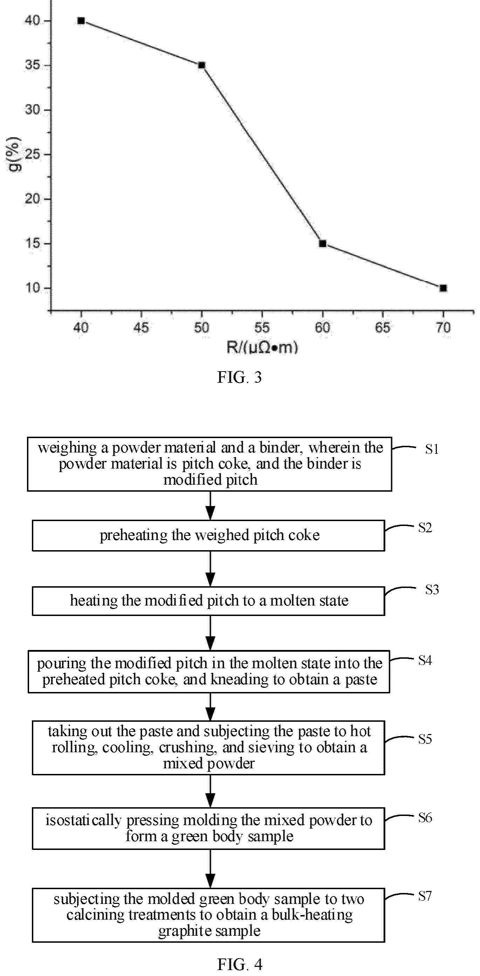

The relationship between the resistivity and the graphitization degree is shown in FIG 3. As can be seen from FIG. 3, the resistivity of samples at room temperature tends to decrease with the increasing graphitization degree (i.e., the g parameter). Graphite-based carbon materials have a planar hexagonal carbon structure. Due to the diversity of graphite structures, their properties of electron mobility within the layer plane are significantly diversified. According to the formula

$$g = \frac{0.3440 - d_{002}}{0.3440 - 0.3354}$$ , at room temperature, the interlayer spacing $d_{002}$ decreases with the increase of the graphitization degree. In this case, the carrier concentration at the grain boundaries, which is the main factor affecting the conductivity of the carbon materials, increases, while the ordering of crystal grain boundaries is improved, and the scattering effect weakens, so that the conductivity of the sample increases, and the resistivity of the sample decreases. The continuously increasing carrier concentration and weakening scattering at the grain boundaries together result in the decrease of resistivity with the increase of graphitization degree.

It can be seen from FIG. 3 that, to achieve a resistivity of graphite equal to or greater than 50 $\mu\Omega\cdot m$, the graphitization degree shall be lower than 35%.

As shown in FIG. 4, the method for preparing the bulk-heating graphite provided in an embodiment may specifically include the following steps when being implemented.

In step S1, a powder material and a binder are weighed, wherein the powder material is pitch coke, and the binder is modified pitch.

As the primary raw material for preparing graphite, the powder material mainly includes petroleum coke, pitch coke, isotropic coke, raw coke, mesocarbon microbeads, and flake graphite powder, etc., among which petroleum coke and pitch coke are commonly used for preparing graphite. The pitch coke is a high-quality coke with a low ash content, and is easily graphitized at a high temperature. Under the same high temperature condition, the graphitization degree of the pitch coke is lower than that of the petroleum coke, and the resistivity of the graphite prepared from the pitch coke is higher than that of the graphite prepared from the petroleum coke. The primary raw material used in the present invention is pitch coke, and specifically is calcined coal tar pitch.

In an embodiment of the method for preparing the bulk-heating graphite of the present invention, the step S1 can specifically include step S11 and step S12.

In step S11, the modified pitch is weighed. A proportion of the modified pitch in the mixture of the pitch coke and the modified pitch is in a range from 23% to 28%.

In some implementations of the present invention, the proportion of the modified pitch in the mixture is 25%. It should be noted that the present invention does not specifically limit the proportion of the pitch coke and the proportion of the modified pitch in the mixture.

In step S12, the pitch coke is weighed. The pitch coke is sieved powder with a particle size in a range from 200 mesh to 325 mesh.

As an example, the particle size of the pitch coke is 250 mesh. It should be noted that the present invention does not specifically limit the particle size of the pitch coke.

In step S2, the weighed pitch coke is preheated.

Specifically, the weighed pitch coke is poured into a kneading pot for preheating. The preheating temperature is in a range from 150°C to 180°C (e.g., 160°C), and the preheating time is in a range from 50 minutes to 70 minutes (e.g., 1 hour). It should be noted that the preheating temperature and the preheating time of the pitch coke are not specifically limited in the present invention.

In step S3, the modified pitch is heated to a molten state.

Specifically, the modified pitch is heated to a temperature equal to or greater than 200°C to transform the modified pitch from a solid state to the molten state. The weight of the modified pitch has almost no changes during transformation from the solid state to the molten state, that is, the weight loss rate is small and negligible.

In step S4, the modified pitch in the molten state is poured into the preheated pitch coke and kneaded to obtain a paste.

Specifically, the modified pitch in the molten state is poured into the kneading pot, and kneaded with the preheated pitch coke. The kneading time is in a range from 40 minutes to 50 minutes (e.g., 45 minutes), and the kneading temperature is in a range from 170°C to 190°C (e.g., 180°C). It should be noted that the kneading time and the kneading temperature are not specifically limited in the present invention.

In step S5, the paste is taken out from the kneading pot and hot rolled, cooled, crushed, and sieved to obtain a mixed powder.

In an embodiment of the method for preparing the bulk-heating graphite of the present invention, the step S5 can specifically include steps S51, S52, S53, and S54.

In step S51, the paste is taken out from the kneading pot after the kneading treatment, fed into a rolling machine, hot-rolled twice at a temperature in a range from 160°C to 190°C.

In some implementations of the present invention, the two hot-rolling processes can be performed at the same or different temperatures, which is not specifically limited in the present invention.

In step S52, the paste is naturally cooled.

In step S53, the naturally cooled paste is crushed.

The paste can be crushed by a jaw crusher, a ball mill, etc.

In step S54, the crushed paste is sieved to a particle size below 100 mesh to obtain the mixed powder.

In step S6, the mixed powder is isostatically pressed and molded to form a green body sample.

In an embodiment of the method for preparing the bulk-heating graphite of the present invention, the step S6 can specifically include steps S61 and S62.

In step S61, the mixed powder is loaded into a steel mold and pre-molded on a hydraulic four-column press. The pre-molding pressure is in a range from 18 MPa to 22 MPa (e.g., 20 MPa), and the bulk density of the pre-molded body is in a range from $1.17/cm^3$ to $1.21/cm^3$ (e.g., $1.19/cm^3$).

In step S62, the pre-molded body is demolded from the hydraulic four-column press, placed into a rubber bag, and then isostatically pressed and molded under a pressure in a range from 110 MPa to 130 MPa (e.g., 120 MPa).

In step S7, the molded green body sample is subjected two calcining treatments to obtain a bulk-heating graphite sample.

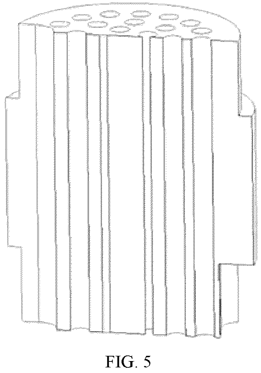

The final bulk-heating graphite sample is shown in FIG. 5. In an embodiment of the method for preparing the bulk-heating graphite of the present invention, the step S7 can specifically include steps S71, S72 and S73.

In step S71, the molded green body sample is subjected to a first calcining treatment to obtain a primary calcined sample.

Specifically, the molded green body sample is subjected to the first calcining treatment in a box-type resistance furnace at a first calcining temperature in a range from 880°C to 920°C (e.g., 900°C), held for 50 minutes to 70 minutes (e.g., 1 hour), and naturally cooled to room temperature to obtain the primary calcined sample.

In step S72, the primary calcined sample is subjected to an impregnation treatment .

In an embodiment of the method for preparing the bulk-heating graphite of the present invention, the step S72 can specifically include steps S721, S722 and S723.

In step S721, the primary calcined sample is taken out from the box-type resistance furnace.

In step S722, an electrically conductive binder is heated and melted.

In step S723, the primary calcined sample is immersed in the melted electrically conductive binder for impregnation treatment.

In the impregnation process, the graphite is impregnated with the binder to fill voids on the surface of or inside the graphite, and then the binder is cured through a heat treatment. In the present invention, a heat impregnation process is adopted, wherein the electrically conductive binder is heated to a certain temperature to be melted, and then the sample is immersed therein.

In step S73, the impregnated primary calcined sample is subjected to a second calcining treatment to obtain the bulk-heating graphite sample.

Specifically, the impregnated primary calcined sample is subjected to the second calcining treatment in a box-type resistance furnace at a temperature in a range from 1800°C to 2000°C (e.g., 2000°C), held for 50 minutes to 70 minutes (e.g., 1 hour), and naturally cooled to room temperature to obtain the bulk-heating graphite sample. In the first calcining treatment, the modified pitch undergoes complex decomposition, polymerization, cyclization and aromatization reactions, releasing a large amount of volatile matter. The escape of volatile matter creates a large number of voids in the body, reducing the bulk density of the sample. The bulk density of the sample can be increased by performing the impregnation and second calcining treatment.

The resistivity of the bulk-heating graphite obtained by adopting the above preparation method can reach 50 $\mu\Omega\cdot m$ or above, and the resistance value of the bulk-heating graphite can reach 0.5 $\Omega$ or above, realizing bulk-heating, where electrification at both ends allows the entire body to generate heat, thereby meeting the requirement of baking the tobacco rod for smoking. The air flowing through the bulk-heating graphite can be fully heated, and the temperature of the air is uniform, resulting in excellent baking effects of the tobacco rod and consistent smoke flavor for every puff.

In an embodiment of the present invention, three bulk-heating graphite samples were prepared by using the above preparation method. The processing conditions and resistivity of each sample are shown in Table. 1.

Table. 1: Processing Conditions and Resistivities of Sample 1 to Sample 3

| No. | Proportion of pitch (%) | First calcining temperature (°C) | Second calcining temperature (°C) | Resistivity ($\mu\Omega\cdot m$) |
|---|---|---|---|---|
| Sample 1 | 25 | 900 | 1800 | 50 to 58 |
| Sample 2 | 25 | 900 | 2000 | 41 to 52 |
| Sample 3 | 25 | 900 | 2200 | 38 to 47 |

According to Table. 1, the resistivity of Sample 1 is the highest, which is in a range from 50 $\mu\Omega\cdot m$ to 58 $\mu\Omega\cdot m$; the resistivity of Sample 2 is the second highest, which is in a range from 41 $\mu\Omega\cdot m$ to 52 $\mu\Omega\cdot m$; and the resistivity of Sample 3 is the lowest, which is in a range from 38 $\mu\Omega\cdot m$ to 47 $\mu\Omega\cdot m$. Therefore, the processing conditions of Sample 1 are the optimal conditions, which means the second calcining temperature is preferably 1800°C.

Further, in another embodiment of the present invention, a bulk-heating graphite is provided, which is prepared by the above preparation method.

Furthermore, in still another embodiment of the present invention, an application of the bulk-heating graphite in a heating device is provided. The application method includes: sleeving copper rings on an upper end and a lower end of the bulk-heating graphite respectively, and electrically energizing the copper rings thereby generating heat.

As compared with the diffuser indirect heating method, the method for preparing the bulk-heating graphite, the product, and the application thereof in the heating device provided in the embodiments of the present invention enable a honeycomb graphite as a whole to possess a heatable resistance, generating heat uniformly upon electrification, so as to produce sufficiently heated air with uniform temperature distribution and improved heating effects. The resistivity of the bulk-heating graphite can reach 50 $\mu\Omega\cdot m$ or above, and the resistance value of the bulk-heating graphite can reach 0.5 $\Omega$, or above, realizing bulk-heating, where electrification at both ends allows the entire body to generate heat, thereby meeting the requirement of baking the tobacco rod for smoking. The air flowing through the bulk-heating graphite can be fully heated, and the temperature of the air is uniform, resulting in excellent baking effects of the tobacco rod and consistent smoke flavor for every puff. Unlike conventional methods, there is no need to combine a porous honeycomb diffuser with other heating elements, making assembly more convenient.

Thus far, various embodiments of the present disclosure have been described in detail. Some details well known in the art are not described to avoid obscuring the concepts of the present disclosure. According to the above description, those skilled in the art would fully understand how to implement the technical solutions disclosed herein.

Although some specific embodiments of the present disclosure have been described in detail by way of examples, those skilled in the art should understand that the above examples are only for the purpose of illustration and are not intended to limit the scope of the present disclosure. It should be understood by those skilled in the art that modifications to the above embodiments and equivalently substitution of part of the technical features may be made without departing from the scope and spirit of the present disclosure. The scope of the present disclosure is defined by the appended claims.

Claims

1. A method for preparing bulk-heating graphite, comprising following steps:

weighing a powder material and a binder, wherein the powder material is pitch coke, and the binder is modified pitch;
preheating the weighed pitch coke;
heating the modified pitch to a molten state;
pouring the modified pitch in the molten state into the preheated pitch coke, and kneading to obtain a paste;
taking out the paste and subjecting the paste to hot rolling, cooling, crushing, and sieving to obtain a mixed powder;
isostatically pressing molding the mixed powder to form a green body sample; and
subjecting the molded green body sample to two calcining treatments to obtain a bulk-heating graphite sample.

2. The method according to claim 1, wherein the step of weighing the powder material and the binder comprises:

weighing the modified pitch, wherein a proportion of the modified pitch in a mixture of the pitch coke and the modified pitch is in a range from 23% to 28%; and
weighing the pitch coke, wherein the pitch coke is sieved powder with a particle size in a range from 200 mesh to 325 mesh.

3. The method according to claim 1, wherein the step of preheating the weighed pitch coke comprises:

pouring the weighed pitch coke into a kneading pot for preheating, wherein a preheating temperature is in a range from 150°C to 180°C, and a preheating time is in a range from 50 minutes to 70 minutes; and
the step of heating the modified pitch to the molten state comprises:
heating the modified pitch to a temperature equal to or greater than 200°C to transform the modified pitch from a solid state to the molten state.

4. The method according to claim 1, wherein the step of pouring the modified pitch in the molten state into the preheated pitch coke and kneading comprises:
pouring the modified pitch in the molten state into the kneading pot, and kneading the modified pitch with the preheated pitch coke, wherein a kneading time is in a range from 40 minutes to 50 minutes, and a kneading temperature is in a range from 170°C to 190°C.

5. The method according to claim 1, wherein the step of taking out the paste and subjecting the paste to hot rolling, cooling, crushing, and sieving to obtain the mixed powder comprises:

taking out the paste from the kneading pot after kneading, and feeding the paste into a rolling machine to hot-roll the paste twice at a temperature in a range from 160°C to 190°C;
naturally cooling the paste;
crushing the paste after the paste is naturally cooled; and
sieving the crushed paste to a particle size below 100 mesh to obtain the mixed powder.

6. The method according to claim 1, wherein the step of isostatically pressing molding the mixed powder to form the green body sample comprises:

loading the mixed powder into a steel mold, and pre-molding the mixed powder on a hydraulic four-column machine, wherein a pre-molding pressure is in a range from 18 MPa to 22 MPa, and a bulk density of the pre-molded body is in a range from $1.17/cm^3$ to $1.21/cm^3$; and
demolding the pre-molded body from the hydraulic four-column press, placing the pre-molded body into a rubber bag, and then isostatically pressing the pre-molded body under a pressure in a range from 110 MPa to 130 MPa.

7. The method according to claim 1, wherein the step of subjecting the molded green body sample to two calcining treatments to obtain the bulk-heating graphite sample comprises:

subjecting the molded green body sample to a first calcining treatment to obtain a primary calcined sample;
subjecting the primary calcined sample to an impregnation treatment; and

subjecting the impregnated primary calcined sample to a second calcining treatment to obtain the bulk-heating graphite sample.

8. The method according to claim 7, wherein the step of subjecting the molded green body sample to the first calcining treatment comprises:

subjecting the molded green body sample to the first calcining treatment in a box-type resistance furnace at a first calcining temperature in a range from 880°C to 920°C, holding the temperature for 50 minutes to 70 minutes, naturally cooling to room temperature to obtain the primary calcined sample,
the step of subjecting the primary calcined sample to the impregnation treatment comprises:
taking out the primary calcined sample from the box-type resistance furnace;
heating and melting an electrically conductive binder; and
immersing the primary calcined sample in the melted electrically conductive binder for impregnation treatment, and
the step of subjecting the impregnated primary calcined sample to the second calcining treatment to obtain the bulk-heating graphite sample comprises:
subjecting the impregnated primary calcined sample to the second calcining treatment in a box-type resistance furnace at a temperature in a range from 1800°C to 2000°C, holding the temperature for 50 minutes to 70 minutes, and naturally cooling to room temperature to obtain the bulk-heating graphite sample.

9. A bulk-heating graphite, prepared by the method according to any one of claims 1 to 8.

10. An application of the bulk-heating graphite according to claim 9 in a heating device, comprising sleeving copper rings on an upper end and a lower end of the bulk-heating graphite respectively, and electrically energizing the copper rings thereby generating heat.

FIG. 1

FIG. 2

FIG. 3

| weighing a powder material and a binder, wherein the powder material is pitch coke, and the binder is modified pitch | S1 |

| preheating the weighed pitch coke | S2 |

| heating the modified pitch to a molten state | S3 |

| pouring the modified pitch in the molten state into the preheated pitch coke, and kneading to obtain a paste | S4 |

| taking out the paste and subjecting the paste to hot rolling, cooling, crushing, and sieving to obtain a mixed powder | S5 |

| isostatically pressing molding the mixed powder to form a green body sample | S6 |

| subjecting the molded green body sample to two calcining treatments to obtain a bulk-heating graphite sample | S7 |

FIG. 4

FIG. 5

## INTERNATIONAL SEARCH REPORT

| International application No. |
|---|
| **PCT/CN2024/103120** |

**A. CLASSIFICATION OF SUBJECT MATTER**

C04B 35/532(2006.01)i;  A24F 40/70(2020.01)i;  A24F 40/46(2020.01)i;  A24F 40/20(2020.01)i;  H05B 3/14(2006.01)i;  H05B 3/02(2006.01)i;  C04B 35/622(2006.01)i

According to International Patent Classification (IPC) or to both national classification and IPC

**B. FIELDS SEARCHED**

Minimum documentation searched (classification system followed by classification symbols)

IPC: C04B, A24F, H05B

Documentation searched other than minimum documentation to the extent that such documents are included in the fields searched

Electronic data base consulted during the international search (name of data base and, where practicable, search terms used)

CNTXT, ENTXT, VEN, CNKI, ELSEVIER: 石墨, 石墨化, 沥青焦, 改质沥青, 混捏, 热轧, 等静压, graphite, graphitization, asphalt coke, modified asphalt, kneading, hot rolling, isostatic pressing

**C. DOCUMENTS CONSIDERED TO BE RELEVANT**

| Category* | Citation of document, with indication, where appropriate, of the relevant passages | Relevant to claim No. |
|---|---|---|
| PX | CN 117800731 A (SICHUAN SANLIAN NEW MATERIAL CO., LTD. et al.) 02 April 2024 (2024-04-02)<br>claims 1-10 | 1-10 |
| Y | CN 104016333 A (LIN QIANFENG) 03 September 2014 (2014-09-03)<br>description, paragraphs 6-12 | 1-10 |
| Y | CN 108455590 A (DATONG XINCHENG NEW MATERIAL CO., LTD.) 28 August 2018 (2018-08-28)<br>description, paragraphs 45-55 | 1-10 |
| A | US 4089934 A (MITSUBISHI CHEMICAL INDUSTRIES LTD.) 16 May 1978 (1978-05-16)<br>entire document | 1-10 |
| A | US 3275488 A (GREAT LAKES CARBON CORP.) 27 September 1966 (1966-09-27)<br>entire document | 1-10 |
| A | CN 108424144 A (DATONG XINCHENG NEW MATERIAL CO., LTD.) 21 August 2018 (2018-08-21)<br>entire document | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 September 2024** | **15 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/103120**

| C. | DOCUMENTS CONSIDERED TO BE RELEVANT | |
|---|---|---|
| Category* | Citation of document, with indication, where appropriate, of the relevant passages | Relevant to claim No. |
| A | CN 114478042 A (YONG'AN DINGFENG CARBON SCIENCE AND TECHNOLOGY CO., LTD.) 13 May 2022 (2022-05-13)<br>entire document | 1-10 |
| A | CN 116573937 A (YONG'AN DINGFENG CARBON SCIENCE AND TECHNOLOGY CO., LTD.) 11 August 2023 (2023-08-11)<br>entire document | 1-10 |
| A | CN 103121671 A (SICHUAN GUANGHAN SHIDA CARBON CO., LTD.) 29 May 2013 (2013-05-29)<br>entire document | 1-10 |
| A | CN 105174251 A (CHENGDU CARBON CO., LTD.) 23 December 2015 (2015-12-23)<br>entire document | 1-10 |

Form PCT/ISA/210 (second sheet) (July 2022)

**INTERNATIONAL SEARCH REPORT**
Information on patent family members

International application No.

**PCT/CN2024/103120**

| Patent document cited in search report | | | Publication date (day/month/year) | Patent family member(s) | | | Publication date (day/month/year) |
|---|---|---|---|---|---|---|---|
| CN | 117800731 | A | 02 April 2024 | None | | | |
| CN | 104016333 | A | 03 September 2014 | None | | | |
| CN | 108455590 | A | 28 August 2018 | None | | | |
| US | 4089934 | A | 16 May 1978 | DE | 2558111 | A1 | 01 July 1976 |
| | | | | JPS | 5184808 | A | 24 July 1976 |
| | | | | JPS | 5839770 | B2 | 01 September 1983 |
| | | | | FR | 2295914 | A1 | 23 July 1976 |
| | | | | FR | 2295914 | B1 | 12 June 1981 |
| US | 3275488 | A | 27 September 1966 | CH | 436091 | A | 15 May 1967 |
| | | | | SE | 302427 | B | 15 July 1968 |
| | | | | GB | 917097 | A | 30 January 1963 |
| | | | | DE | 1155386 | B | 03 October 1963 |
| CN | 108424144 | A | 21 August 2018 | None | | | |
| CN | 114478042 | A | 13 May 2022 | None | | | |
| CN | 116573937 | A | 11 August 2023 | None | | | |
| CN | 103121671 | A | 29 May 2013 | None | | | |
| CN | 105174251 | A | 23 December 2015 | None | | | |

Form PCT/ISA/210 (patent family annex) (July 2022)